# EUROPEAN PATENT APPLICATION

(11) **EP 4 216 393 A2**
(43) Date of publication of application: **26.07.2023**
(21) Application number: 23150419.2
(22) Date of filing: 05.01.2023
(51) Int. Cl.: H02J 3/14, H02J 15/00

(54) **HYDROGEN SYSTEM OPERATION PLANNING DEVICE**

(30) Priority: 21.01.2022 JP 2022007828
(71) Applicant: Toshiba Energy Systems & Solutions Corporation, Saiwai-ku Kawasaki-shi Kanagawa 2120013 (JP)
(72) Inventor: AKIBA, Takashi, Kawasaki-shi, Kanagawa, 212-0013 (JP); TAMARU, Shingo, Kawasaki-shi, Kanagawa, 212-0013 (JP); YAMANE, Fumiyuki, Kawasaki-shi, Kanagawa, 212-0013 (JP); BABA, Junsuke, Kawasaki-shi, Kanagawa, 212-0013 (JP)
(74) Representative: Hoffmann Eitle

(57) **Abstract**

To provide a hydrogen system operation planning device capable of accurately preparing an operation plan that achieves efficient operation in a hydrogen system. In the hydrogen system operation planning device of the embodiment, a classification unit receives input of DR commands regarding demand for electric power in the hydrogen system and classifies the input DR commands into a first DR group and a second DR group with a lower priority than the first DR group. A first planning unit prepares a first operation plan to reflect the DR command classified into the first DR group. A second planning unit prepares a second operation plan by reflecting contents of the DR command classified into the second DR group on the first operation plan so that contents of the DR command classified into the first DR group have priority over the contents of the DR command classified into the second DR group.

## Description

### FIELD

Embodiments described herein relate generally to a hydrogen system operation planning device.

### BACKGROUND

A hydrogen system includes a hydrogen production device that uses electric power to produce hydrogen, a hydrogen power generator that generates electric power from hydrogen, and other devices. When there is excess supply of electric power in a power grid, the hydrogen system can demand electric power from the power grid to produce hydrogen in the hydrogen production device. When there is excess demand for electric power in the power grid, the hydrogen power generator can generate electric power from hydrogen and supply the electric power to the power grid. Therefore, the hydrogen system can contribute to stabilization of the power grid.

### PRIOR ART DOCUMENT

### PATENT DOCUMENT

[Patent Document 1] WO2020/203520
[Patent Document 2] WO2020/179849

### SUMMARY

### PROBLEMS TO BE SOLVED BY THE INVENTION

A hydrogen system executes operation according to an operation plan prepared in response to commands received from external sources. The operation plan is required to achieve efficient operation in the hydrogen system.

Therefore, the problem to be solved by the present invention is to provide a hydrogen system operation planning device capable of accurately preparing an operation plan that achieves efficient operation in a hydrogen system.

### MEANS FOR SOLVING THE PROBLEMS

A hydrogen system operation planning device of this embodiment includes a classification unit, a first planning unit, and a second planning unit, and plans operation of a hydrogen system equipped with a hydrogen production device that produces hydrogen by using electric power. The classification unit receives input of DR commands regarding demand for electric power in the hydrogen system and classifies the input DR commands into a first DR group and a second DR group with a lower priority than the first DR group. The first planning unit prepares a first operation plan to reflect the DR command classified into the first DR group. The second planning unit prepares a second operation plan by reflecting contents of the DR command classified into the second DR group on the first operation plan so that contents of the DR command classified into the first DR group have priority over the contents of the DR command classified into the second DR group.

### BRIEF DESCRIPTION OF THE DRAWINGS

FIG. 1 is a block diagram schematically illustrating an overall configuration including a hydrogen system 100 and a hydrogen system operation planning device 200 according to a first embodiment.
FIG. 2 is a block diagram illustrating a configuration of the hydrogen system operation planning device 200 according to the first embodiment.
FIG. 3 is a graphic chart illustrating an example of a first operation plan FP1 and a second operation plan FP2 prepared in the hydrogen system operation planning device 200 according to the first embodiment.
FIG. 4 is a graphic chart illustrating an example of the first operation plan FP 1 and the second operation plan FP2 prepared in the hydrogen system operation planning device 200 according to the first embodiment.
FIG. 5 is a block diagram illustrating a configuration of a hydrogen system operation planning device 200b according to a second embodiment.
FIG. 6 is a block diagram illustrating a configuration of a hydrogen system operation planning device 200c according to a third embodiment.
FIG. 7 is a graphic chart illustrating an example of a hydrogen shipping command CH input to a planning unit 270 and an operation plan FP prepared by the planning unit 270 in the hydrogen system operation planning device 200c according to the third embodiment.

### DETAILED DESCRIPTION

### <First Embodiment>

### [A] Overall Configuration

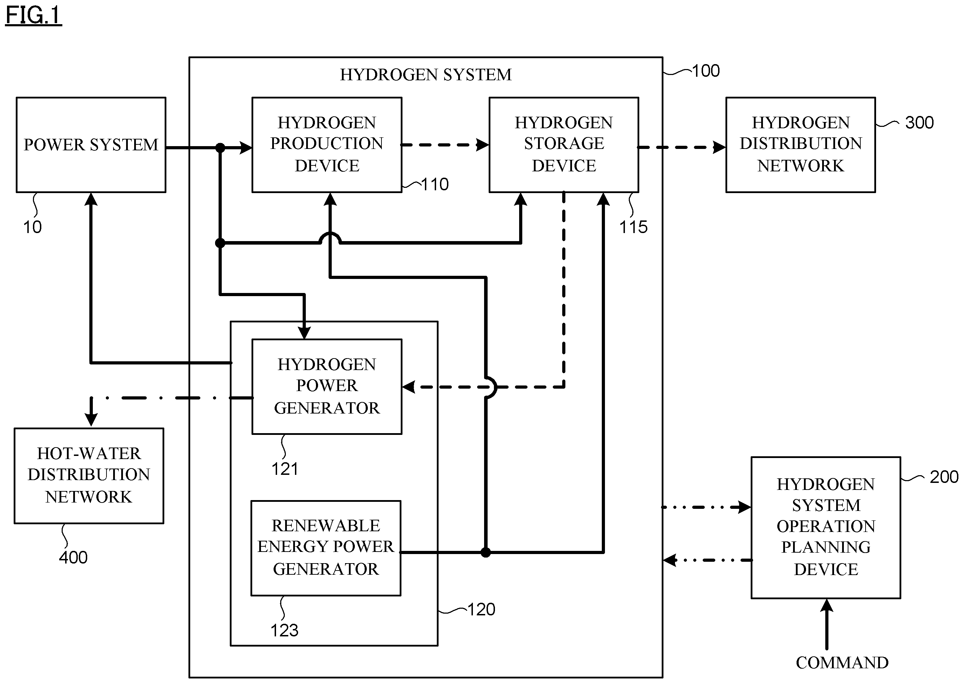

FIG. 1 is a block diagram schematically illustrating an overall configuration including a hydrogen system 100 and a hydrogen system operation planning device 200 according to a first embodiment.

### [A-1] Hydrogen system 100

As illustrated in FIG. 1, the hydrogen system 100 includes a hydrogen production device 110, a hydrogen storage device 115, and a power generator 120 and is configured to execute operation according to an operation plan prepared in the hydrogen system operation planning device 200. Each part of the hydrogen system 100 is described in turn.

### [A-1-1] Hydrogen production device 110

The hydrogen production device 110 is configured to produce hydrogen by using electric power. The hydrogen production device 110 is, for example, a hydrogen electrolysis device, which generates hydrogen by electrolyzing water. Here, the hydrogen production device 110 is configured to produce hydrogen by using at least one of electric power supplied from a power system 10 (power grid) and electric power supplied from the power generator 120.

### [A-1-2] Hydrogen storage device 115

The hydrogen storage device 115 is configured to store hydrogen produced by the hydrogen production device 110. The hydrogen storage device 115 is, for example, a gas tank that stores hydrogen gas. Here, the hydrogen storage device 115 compresses and stores hydrogen gas produced by the hydrogen production device 110, for example, using at least one of the electric power supplied from the power system 10 and the electric power supplied from the power generator 120. In addition to this, the hydrogen storage device 115 may also be, for example, a liquefied tank, which is configured to store liquefied hydrogen. Hydrogen stored in the hydrogen storage device 115 is supplied as fuel to a hydrogen power generator 121 and also to a hydrogen distribution network 300.

### [A-1-3] Power generator 120

The power generator 120 includes the hydrogen power generator 121 and a renewable energy power generator 123 and is configured to generate electric power. The electric power generated by the power generator 120 is supplied to the power system 10.

In the power generator 120, the hydrogen power generator 121 generates electric power using hydrogen produced by the hydrogen production device 110. The hydrogen power generator 121 is, for example, a fuel cell device, which generates electric power by reaction of hydrogen supplied to a hydrogen electrode and oxygen supplied to an oxygen electrode through an electrolyte membrane. The hydrogen power generator 121 uses electric power supplied from the power system 10 to generate electric power. In addition, the hydrogen power generator 121 generates hot water with heat generated by electric power generation. The hot water generated by the hydrogen power generator 121 is supplied to a hot-water distribution network 400.

In the power generator 120, the renewable energy power generator 123 generates electric power from renewable energy. The renewable energy power generator 123 is, for example, a photovoltaic power generator, which generates electric power by receiving sunlight on a solar panel and performing photoelectric conversion. The renewable energy power generator 123 may also be a wind power generator, a biomass power generator, or other power generators. The electric power generated by the renewable energy power generator 123 is supplied to the hydrogen production device 110 and the hydrogen storage device 115 and used.

### [A-2] Hydrogen system operation planning device 200

The hydrogen system operation planning device 200 is provided for planning operation of the hydrogen system 100. Here, the hydrogen system operation planning device 200 receives input of information regarding each part that forms the hydrogen system 100 from the hydrogen system 100, and input of commands regarding the operation of the hydrogen system 100 from the outside. The hydrogen system operation planning device 200 then prepares an operation plan for the hydrogen system 100 based on the input information and commands and outputs the operation plan to the hydrogen system 100.

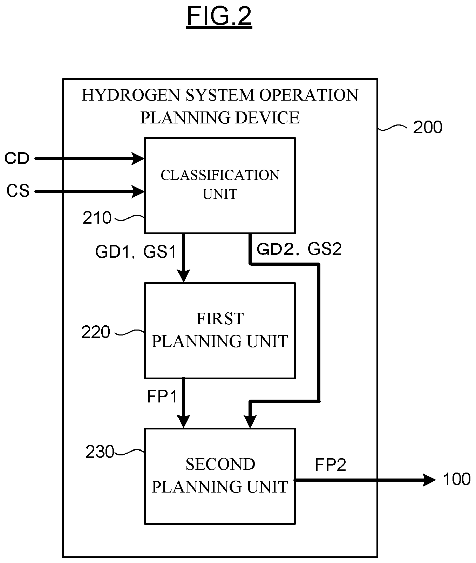

FIG. 2 is a block diagram illustrating a configuration of the hydrogen system operation planning device 200 according to the first embodiment.

As illustrated in FIG. 2, the hydrogen system operation planning device 200 includes a classification unit 210, a first planning unit 220, and a second planning unit 230. The hydrogen system operation planning device 200 includes arithmetic units (computers) and a storage, and the arithmetic units are configured to function as the classification unit 210, the first planning unit 220, and the second planning unit 230 using programs stored by the storage.

### [A-2-1] Classification unit 210

ADR command CD regarding demand for electric power in the hydrogen system 100 is input to the classification unit 210. The DR commands CD are what they call "demand response" commands and, for example, commands regarding differential electric power DR, electric power DR, and electric energy DR. The classification unit 210 classifies the input DR commands CD into a first DR group GD1 and a second DR group GD2 with a lower priority than the first DR group GD1.

In addition, a supply command CS regarding supply of electric power generated by the hydrogen system 100 is input to the classification unit 210. The supply commands CS are, for example, a reverse power flow electric energy command and a reverse power flow electric power command. The classification unit 210 classifies the input supply commands CS into a first supply command group GS1 and a second supply command group GS2 with a lower priority than the first supply command group GS1.

The classification unit 210 executes the above classification according to predetermined classification criteria. For example, the classification unit 210 executes the classification using an evaluation value indicating an economic value (for example, a profit according to DR compensation, an amount of electric power purchased, and the amount of electric power purchased) as the classification criteria. The classification unit 210 may also execute the classification using an order in which the commands are received as the classification criteria, or using evaluation values indicating environmental impacts, such as an amount of carbon dioxide emissions or a percentage of renewable energy effectively utilized, as the classification criteria. The evaluation value includes an estimated value. The evaluation value may be a weighted sum of multiple factors.

### [A-2-2] First planning unit 220

The first planning unit 220 prepares a first operation plan FP1 (first command reflected plan) based on contents of the DR command CD classified into the first DR group GD1 in the classification unit 210 and contents of the supply command CS classified into the first supply command group GS1 in the classification unit 210.

The preparation of the first operation plan FP1 reflects the contents of the DR command CD classified into the first DR group GD1 and the contents of the supply command CS classified into the first supply command group GS1.

### [A-2-3] Second planning unit 230

The second planning unit 230 prepares a second operation plan FP2 (second command reflected plan) based on contents of the DR command CD classified into the second DR group GD2 in the classification unit 210 and contents of the supply command CS classified into the second supply command group GS2 in the classification unit 210.

The preparation of the second operation plan FP2 reflects the contents of the DR command CD classified into the second DR group GD2 and the contents of the supply command CS classified into the second supply command group GS2 in the classification unit 210 on the first operation plan FP1 prepared in the first planning unit 220.

When preparing the second operation plan FP2, the second planning unit 230 gives priority to the contents of the DR command CD classified into the first DR group GD1 over the contents of the DR command CD classified into the second DR group GD2 and the contents of the supply command CS classified into the second supply command group GS2.

The second operation plan FP2 prepared by the second planning unit 230 is then displayed on a display screen of a display device (not illustrated) so that a planning part reflecting each command can be recognized. The second operation plan FP2 prepared in the second planning unit 230 is output to the hydrogen system 100, and operation is performed according to the second operation plan FP2 in the hydrogen system 100.

In the preparation of the first operation plan FP1 and the second operation plan FP2, statuses of the hydrogen system 100 during a planning target period are taken into account in addition to the commands input from the classification unit 210. Concretely, an amount of hydrogen that can be stored in the hydrogen storage device 115 during the planning target period, an electric power generation amount that can be generated by the renewable energy power generator 123 during the planning target period, and other statuses are taken into account. A response time of an object to be measured in each part forming the hydrogen system 100 may also be taken into account. The statuses of the hydrogen system 100 during the planning target period may be, for example, estimated values (predicted values) obtained by learning historical data. When the contents of the DR command CD and the supply command CS cannot be fully reflected due to the statuses of the hydrogen system 100 during the planning target period, the first operation plan FP1 and the second operation plan FP2 are prepared while reflecting a part of the contents of the DR command CD and the supply command CS or without reflecting the contents of the DR command CD and the supply command CS, as will be obvious.

The first operation plan FP1 and the second operation plan FP2 are optimized so that evaluation values set in advance are optimal values. The evaluation values are, for example, economic values. In addition, the evaluation values may be environmental impact values such as carbon dioxide emissions, and other values. The evaluation value includes an estimated value. The evaluation value may be a weighted sum of multiple factors.

Optimization may be performed by repeating the process of preparing the first operation plan FP1 and the second operation plan FP2 with the predetermined number of iterations. In addition, accuracy of the optimization in the second planning unit 230 may be set lower than accuracy of the optimization in the first planning unit 220 to achieve faster plan preparation.

### [B] Operation of hydrogen system operation planning device 200

Operation of the hydrogen system operation planning device 200 of this embodiment is explained.

### [B-1] Case 1

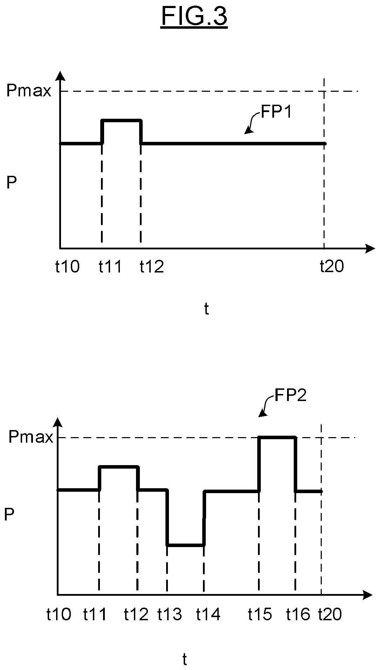

FIG. 3 is a graphic chart illustrating an example of each of the first operation plan FP1 and the second operation plan FP2 prepared in the hydrogen system operation planning device 200 according to the first embodiment.

In FIG. 3, a horizontal axis is time t and a vertical axis is a hydrogen production amount P (corresponding to the electric energy used in hydrogen production). FIG. 3 illustrates the case where the planning target period ranges from a start time t10 to an end time t20.

FIG. 3 illustrates the case (Case 1) when a first increase DR command and a second increase DR command different from the first increase DR command are input to the classification unit 210 as the DR commands CD, and the classification unit 210 classifies the first increase DR command into the first DR group GD1 and the second increase DR command into the second DR group GD2.

### [B-1-1] Preparation of first operation plan FP1

In this case, when preparing the first operation plan FP1, the first planning unit 220 reflects contents of the first increase DR command classified into the first DR group GD1 in the classification unit 210, as illustrated in the upper part of FIG. 3.

Here, in the operation plan prepared in advance for the planning target period, the contents of the first increase DR command are reflected by increasing the electric energy demanded by hydrogen production by increasing the hydrogen production amount P in a range from time t11 to time t12, for example.

In the preparation of the first operation plan FP1, the status of the hydrogen system 100 during the planning target period is taken into account. For example, an increasing amount in the hydrogen production amount P and a time zone during which the hydrogen production amount P is increased are adjusted as appropriate so as not to exceed an upper limit value of the amount of hydrogen that can be stored in the hydrogen storage device 115 (including an estimated amount) during the planning target period. For example, the increasing amount in the hydrogen production amount P and the time zone during which the hydrogen production amount P is increased are set so that the upper limit value of the hydrogen storage amount is reached at the end time t20 of the planning target period.

### [B-1-2] Preparation of second operation plan FP2

Next, when preparing the second operation plan FP2, the second planning unit 230 reflects contents of the second increase DR command classified into the second DR group GD2 in the classification unit 210, as illustrated in the lower part of FIG. 3.

When preparing the second operation plan FP2, the contents of the first increase DR command classified into the first DR group GD1 have priority over the contents of the second increase DR command classified into the second DR group GD2.

Thus, for example, the contents of the second increase DR command are reflected in a time zone excluding the time zone (t11 to t12) when the contents of the first increase DR command are reflected. Here, the contents of the second increase DR command are reflected by increasing the electric energy demanded by hydrogen production by increasing the hydrogen production amount P in a range from time t15 to time t16.

In the preparation of the second operation plan FP2, the status of the hydrogen system 100 during the planning target period is taken into account as in the case of the preparation of the first operation plan FP1. For example, when the contents of the second increase DR command are reflected, the hydrogen production amount P is reduced during a time zone before the time zone (t15 to t16) when the contents of the second increase DR command are reflected, when the amount of hydrogen (including the estimated amount) that can be stored in the hydrogen storage device 115 exceeds the upper limit value during the planning target period. Here, the hydrogen production amount P is reduced in a range from time t13 to time t14, which is a time zone excluding the time zone (t11 to t12) when the contents of the first increase DR command are reflected.

### [B-2] Case 2

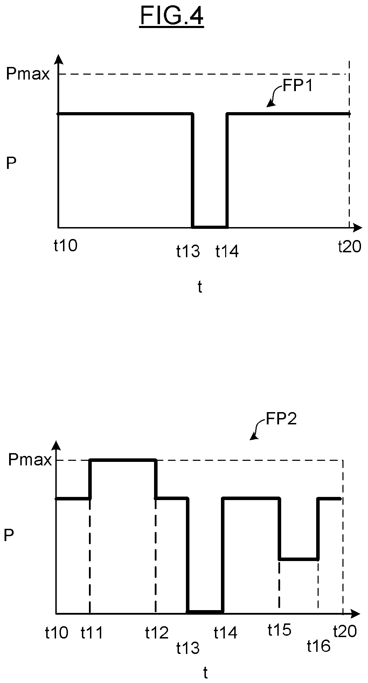

FIG. 4 is a graphic chart illustrating an example of each of the first operation plan FP1 and the second operation plan FP2 prepared in the hydrogen system operation planning device 200 according to the first embodiment.

In FIG. 4, a horizontal axis is time t and a vertical axis is the hydrogen production amount P (corresponding to the electric energy used in hydrogen production) as in FIG. 3. FIG. 4 illustrates the case where the planning target period ranges from the start time t10 to the end time t20 as in FIG. 3.

FIG. 4 illustrates the case (Case 2) when a decrease DR command is input to the classification unit 210 as the DR command CD and a reverse power flow command is input to the classification unit 210 as the supply command CS, and the classification unit 210 classifies the reverse power flow command into the first supply command group GS1 and the decrease DR command into the second DR group GD2.

### [B-2-1] Preparation of first operation plan FP1

In this case, when preparing the first operation plan FP1, the first planning unit 220 reflects contents of the reverse power flow command classified into the first supply command group GS1 in the classification unit 210, as illustrated in the upper part of FIG. 4.

Here, in an operation plan (basic operation plan) prepared in advance for the planning target period, for example, the contents of the reverse power flow command are reflected by stopping the operation of the hydrogen production device 110 by decreasing the hydrogen production amount P to zero in a range from time t13 to time t14, and purchasing electric power from the power generator 120 to the power system 10.

### [B-2-2] Preparation of second operation plan FP2

Next, when preparing the second operation plan FP2, the second planning unit 230 reflects contents of the decrease DR command classified into the second DR group GD2 in the classification unit 210, as illustrated in the lower part of FIG. 4.

When preparing the second operation plan FP2, the contents of the reverse power flow command classified into the first DR group GD1 have priority over the contents of the decrease DR command classified into the second DR group GD2.

Thus, the contents of the decrease DR command are reflected, for example, during a time zone excluding the time zone (t13 to t14) when the contents of the reverse power flow command are reflected. Here, the contents of the decrease DR command are reflected by decreasing the electric energy demanded by hydrogen production by decreasing the hydrogen production amount P in a range from time t15 to time t16.

In the preparation of the second operation plan FP2, the statuses of the hydrogen system 100 during the planning target period are taken into account, as described above. For example, when the amount of hydrogen stored in the hydrogen storage device 115 is a set value or less when the contents of the decrease DR command are reflected during the planning target period, the hydrogen production amount P is increased during a time zone before the time zone (t15 to t16) when the decrease DR command is reflected. For example, the hydrogen production amount P is increased in a range from time t11 to time t12, which is a time zone excluding the time zone (t13 to t14) reflecting the contents of the reverse power flow command. At this time, the range of the time zone for increasing the hydrogen production amount P is adjusted appropriately so that a maximum hydrogen production amount Pmax that the hydrogen production device 110 can produce hydrogen is not exceeded.

### [C] Summary

As described above, in the hydrogen system operation planning device 200 of this embodiment, the classification unit 210 classifies the DR commands CD into the first DR group GD1 and the second DR group GD2, and also classifies the supply commands CS into the first supply command group GS1 and the second supply command group GS2. The first planning unit 220 prepares the first operation plan FP1 to reflect the DR command CD classified into the first DR group GD1 and the supply command CS classified into the first supply command group GS1. The second planning unit 230 prepares the second operation plan FP2 by reflecting the contents of the DR command CD classified into the second DR group GD2 and the contents of the supply command CS classified into the second supply command group GS2 on the first operation plan FP1. Here, the second planning unit 230 prepares the second operation plan FP2 by reflecting the contents of the supply command CS classified into the first supply command group GS1 and the contents of the DR command CD classified into the first DR group GD1 on the first operation plan FP1 to have priority over the contents of the supply command CS classified into the second supply command group GS2.

Therefore, the hydrogen system operation planning device 200 of this embodiment can accurately prepare the operation plan that achieves efficient operation in the hydrogen system 100 in response to the DR command CD and the supply command CS. As a result, this embodiment can contribute to stabilization of the power system 10 (power grid).

### <Second Embodiment>

### [A] Configuration of hydrogen system operation planning device 200b

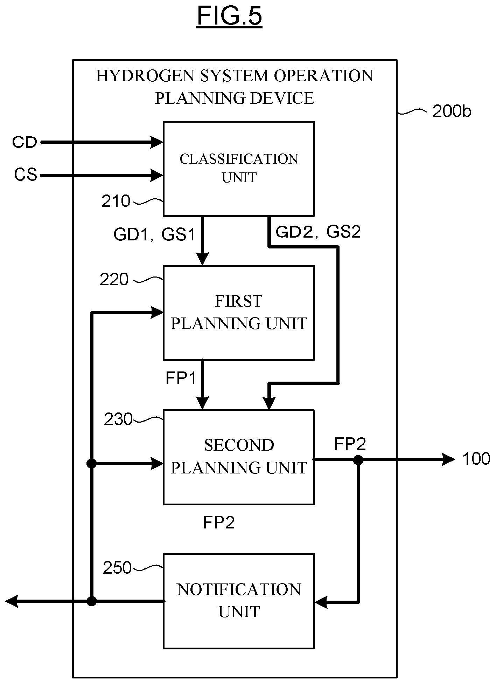

FIG. 5 is a block diagram illustrating a configuration of a hydrogen system operation planning device 200b according to a second embodiment.

As illustrated in FIG. 5, the hydrogen system operation planning device 200b further includes a notification unit 250, which is different from the first embodiment (refer to FIG. 2) in addition to including the classification unit 210, the first planning unit 220, and the second planning unit 230. Except for this and related points, this embodiment is similar to the first embodiment. For this reason, duplicated matters will be omitted from the explanation as appropriate.

In the hydrogen system operation planning device 200b, an arithmetic unit forming the hydrogen system operation planning device 200b is configured to function as the notification unit 250 by programs as same as the classification unit 210, the first planning unit 220, and the second planning unit 230.

The notification unit 250 is provided for notifying the outside of a planning part of the second operation plan FP2 prepared by the second planning unit 230 at a first planning time T1, which corresponds to the DR command CD. The notification is executed, for example, to an external aggregator or other organizations. The notification is executed, for example, according to input notification commands.

To illustrate the case in FIG. 3, for example, the notification unit 250 provides notification for a planning part that increases the demand for electric power during the time zone from time t11 to time t12 according to the first increase DR command, and a planning part that increases the demand for electric power during the time zone from time t15 to time t16 according to the second increase DR command.

The information regarding the planning parts notified by the notification unit 250 is input to the first planning unit 220 and the second planning unit 230 and is given priority when updating the first operation plan FP1 and the second operation plan FP2 at a second planning time T2, which is after the first planning time T1.

Here, when updating the first operation plan FP1 at the second planning time T2, the first planning unit 220 gives priority to the contents of the planning part at the first planning time T1, which are notified externally by the notification unit 250, over the contents of the DR command CD, which are classified into the first DR group GD1.

When updating the second operation plan FP2 at the second planning time T2, the second planning unit 230 gives priority to the contents of the planning part at the first planning time T1, which are notified externally by the notification unit 250, over the contents of the DR command CD, which are classified as into second DR group GD2.

To illustrate the case in FIG. 3, the first planning unit 220 executes the update of the first operation plan FP1 while retaining the planning part that increases the demand for electric power during the time zone from time t11 to time t12 according to the first increase DR command, for example. Similarly, the second planning unit 230 executes the update of the second operation plan FP2 while retaining the planning parts that increase the demand for electric power during the time zone from time t11 to time t12 according to the first increase DR command and increase the demand for electric power during the time zone from time t15 to time t16 according to the second increase DR command, for example.

The priority (weighting) when updating the first operation plan FP1 and the second operation plan FP2 may be changed depending on whether the information regarding the planning part notified by the notification unit 250 is notified as confirmed information with no plan change or as unconfirmed information with a possible plan change. For example, when the planning part is notified as the confirmed information, the first operation plan FP 1 and the second operation plan FP2 are updated while retaining the notified planning part without change. On the other hand, when the planning part is notified as the unconfirmed information, the first operation plan FP1 and the second operation plan FP2 are updated while alloying the change of the notified planning part.

### [B] Summary

As described above, in the hydrogen system operation planning device 200b of this embodiment, the information regarding the planning part notified externally by the notification unit 250 is taken into account when updating the first operation plan FP1 and the second operation plan FP2.

Therefore, the hydrogen system operation planning device 200b of this embodiment can accurately prepare the operation plan that achieves efficient operation of the hydrogen system 100, even when the notification unit 250 notifies the outside about the operation plan of the hydrogen system 100. As a result, this embodiment can contribute to stabilization of the power system 10 (power grid).

### <Third Embodiment>

### [A] Configuration of hydrogen system operation planning device 200c

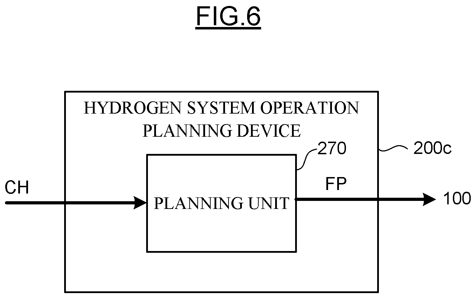

FIG. 6 is a block diagram illustrating a configuration of a hydrogen system operation planning device 200c according to a third embodiment.

As illustrated in FIG. 6, the hydrogen system operation planning device 200c includes a planning unit 270. The hydrogen system operation planning device 200c includes an arithmetic unit (computer), and the arithmetic unit is configured to function as the planning unit 270 by programs. Except for the different configuration of the hydrogen system operation planning device 200c and related points, this embodiment is similar to the first embodiment. For this reason, duplicated matters will be omitted from the explanation as appropriate.

A hydrogen shipping command CH regarding an amount of hydrogen to be shipped from the hydrogen storage device 115 of the hydrogen system 100 to the outside (hydrogen distribution network 300 (refer to FIG. 1)) is input to the planning unit 270, and the planning unit 270 prepares an operation plan FP (shipping command reflected plan) based on the input hydrogen shipping command CH. The planning unit 270 then outputs the operation plan FP to the hydrogen system 100.

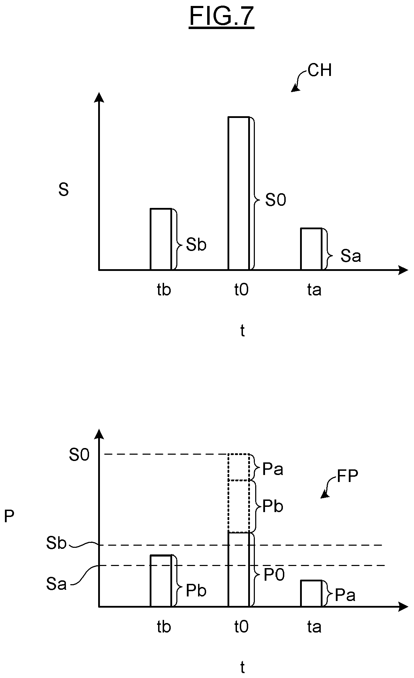

FIG. 7 is a graphic chart illustrating an example of each of the hydrogen shipping command CH input to the planning unit 270 and the operation plan FP prepared by the planning unit 270 in the hydrogen system operation planning device 200c of the third embodiment.

The upper part of FIG. 7 illustrates the hydrogen shipping command CH input to the planning unit 270, where a horizontal axis is time t and a vertical axis is a hydrogen shipping amount S. On the other hand, the lower part of FIG. 7 illustrates the operation plan FP prepared by the planning unit 270, where a horizontal axis is time t and a vertical axis is the hydrogen production amount P.

As illustrated in the upper part of FIG. 7, the hydrogen shipping command CH contains reference time shipping information regarding a shipping reference amount S0, advanced shipping information regarding an advanced shipping available amount Sb, and postponed shipping information regarding a postponed shipping available amount Sa.

The shipping reference amount S0 is an amount of hydrogen shipped from the hydrogen system 100 to the outside at reference time t0. Concretely, the shipping reference amount S0 corresponds to the number of hydrogen tank trailers (hydrogen transport vehicles) (shipping capacity) scheduled to be on standby for shipping from the hydrogen system 100 at the reference time t0.

The advanced shipping available amount Sb is an amount of hydrogen that can be shipped from the hydrogen system 100 at time tb before the reference time t0 of the shipping reference amount S0. Concretely, the advanced shipping available amount Sb corresponds to the number of hydrogen tank trailers (shipping capacity) that are scheduled to receive shipments from the hydrogen system 100 at the reference time t0 that may be on standby for shipping at the time tb before the reference time t0.

The postponed shipping available amount Sa is an amount of hydrogen that can be shipped from the hydrogen system 100 at time ta after the reference time t0 of the shipping reference amount S0. Concretely, the postponed shipping available amount Sa corresponds to the number of hydrogen tank trailers (shipping capacity) that are scheduled to receive shipments from the hydrogen system 100 at the reference time t0 that may be on standby for shipping at the time ta after the reference time t0.

The planning unit 270 prepares the operation plan FP for the hydrogen system 100 as illustrated in the lower part of FIG. 7, based on the hydrogen shipping command CH, which contains the reference time shipping information regarding the shipping reference amount S0, the advanced shipping information regarding the advanced shipping available amount Sb, and the postponed shipping information regarding the postponed shipping available amount Sa as illustrated in the upper part of FIG. 7.

Here, the planning unit 270 prepares the operation plan FP for a hydrogen advanced production amount Pb, a hydrogen postponed production amount Pa, and a reference time hydrogen production amount P0, as illustrated in the lower part of FIG. 7.

The hydrogen advanced production amount Pb is the hydrogen production amount produced by the hydrogen production device 110 of the hydrogen system 100 at the time tb before the reference time t0. The planning unit 270 sets the hydrogen advanced production amount Pb to be the advanced shipping available amount Sb or less.

The hydrogen postponed production amount Pa is the hydrogen production amount produced by the hydrogen production device 110 of the hydrogen system 100 at the time ta after the reference time t0. The planning unit 270 sets the hydrogen postponed production amount Pa to be the postponed shipping available amount Sa or less.

The reference time hydrogen production amount P0 is the hydrogen production amount produced by the hydrogen production device 110 of the hydrogen system 100 at the reference time t0. The planning unit 270 sets the reference time hydrogen production amount P0 so that the reference time hydrogen production amount P0 is equal to a value obtained by subtracting the sum of the hydrogen advanced production amount Pb and the hydrogen postponed production amount Pa from the shipping reference amount S0.

When preparing the operation plan FP, statuses of the hydrogen system 100 during a planning target period (between tb and ta) are taken into account. Concretely, the amount of hydrogen that can be stored in the hydrogen storage device 115, an electric power generation amount that can be generated by the renewable energy power generator 123 during the planning target period, and other statuses are taken into account. The statuses of the hydrogen system 100 during the planning target period may be, for example, estimated values (predicted values) obtained by learning historical data.

### [B] Summary

As described above, in the hydrogen system operation planning device 200c of this embodiment, the planning unit 270 prepares the operation plan FP for the hydrogen system 100 based on the hydrogen shipping command regarding the amount of hydrogen to be shipped from the hydrogen system 100 to the outside. Here, the planning unit 270 prepares the operation plan FP so that the hydrogen advanced production amount Pb is the advanced shipping available amount Sb or less, the hydrogen postponed production amount Pa is the postponed shipping available amount Sa or less, and the reference time hydrogen production amount P0 is equal to the value obtained by subtracting the sum of the hydrogen advanced production amount Pb and the hydrogen postponed production amount Pa from the shipping reference amount S0.

Therefore, the hydrogen system operation planning device 200c of this embodiment can accurately prepare the operation plan FP for the hydrogen system 100 according to the status in which hydrogen is shipped from the hydrogen system 100 to the outside.

As described in the first and second embodiments, the planning unit 270 may execute the preparation of the operation plan FP, taking into account the DR commands CD and the supply commands CS.

### <Other embodiments>

While certain embodiments have been described, these embodiments have been presented by way of example only, and are not intended to limit the scope of the inventions. Indeed, those embodiments may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE SIGNS

10: Power system, 100: hydrogen system, 110: hydrogen production device, 115: hydrogen storage device, 120: power generator, 121: hydrogen power generator, 123: renewable energy power generator, 200: hydrogen system operation planning device, 200b: hydrogen system operation planning device, 200c: hydrogen system operation planning device, 210: classification unit, 220: first planning unit, 230: second planning unit, 250: notification unit, 270: planning unit, 300: hydrogen distribution network, 400: hot-water distribution network.

## Claims

1. A hydrogen system operation planning device for planning operation of a hydrogen system, which includes a hydrogen production device producing hydrogen by using electric power, comprising:
a classification unit configured to receive input of DR commands regarding demand for the electric power in the hydrogen system, and to classify the input DR commands into a first DR group and a second DR group with a lower priority than the first DR group;
a first planning unit configured to prepare a first operation plan to reflect the DR command classified into the first DR group; and
a second planning unit configured to prepare a second operation plan by reflecting contents of the DR command classified into the second DR group on the first operation plan so that contents of the DR command classified into the first DR group have priority over the contents of the DR command classified into the second DR group.

2. The hydrogen system operation planning device according to claim 1, wherein
the hydrogen system includes:
a power generator for generating electric power, and
the classification unit receives input of supply commands regarding supply of electric power generated by the hydrogen system, and classifies the input supply commands into a first supply command group and a second supply command group with a lower priority than the first supply command group,
the first planning unit prepares the first operation plan to reflect the supply command classified into the first supply command group, and
the second planning unit prepares the second operation plan by reflecting contents of the supply command classified into the second supply command group on the first operation plan so that contents of the supply command classified into the first supply command group and the contents of the DR command classified into the first DR group are reflected in priority over the contents of the supply command classified into the second supply command group.

3. The hydrogen system operation planning device according to claim 2, wherein
the power generator includes:
a hydrogen power generator for generating electric power using hydrogen produced by the hydrogen production device.

4. The hydrogen system operation planning device according to claim 2 or 3, wherein
the power generator includes:
a renewable energy power generator for generating electric power from renewable energy.

5. The hydrogen system operation planning device according to any one of claims 1 to 4, further comprising:
a notification unit configured to notify the outside of a planning part of the second operation plan prepared by the second planning unit at a first planning time T1, which corresponds to the DR command, wherein
the first planning unit gives priority to contents of the planning part at the first planning time T1, which are notified externally by the notification unit, over the contents of the DR command classified into the first DR group when updating the first operation plan at a second planning time T2, which is after the first planning time T1,
the second planning unit gives priority to the contents of the planning part at the first planning time T1, which are notified externally by the notification unit, over the contents of the DR command classified into the second DR group when updating the second operation plan at the second planning time T2.

6. A hydrogen system operation planning device for planning operation of a hydrogen system, which includes a hydrogen production device producing hydrogen by using electric power and a hydrogen storage device storing hydrogen produced by the hydrogen production device, comprising:
a planning unit configured to prepare an operation plan based on a hydrogen shipping command regarding an amount of hydrogen to be shipped from the hydrogen system to the outside, wherein
the hydrogen shipping command contains:
reference time shipping information regarding a shipping reference amount shipping hydrogen from the hydrogen system at a reference time;
advanced shipping information regarding an advanced shipping available amount capable of shipping hydrogen from the hydrogen system at a time before the reference time of the shipping reference amount; and
postponed shipping information regarding a postponed shipping available amount capable of shipping hydrogen from the hydrogen system at a time after the reference time of the shipping reference amount, and
the planning unit prepares the operation plan so that
a hydrogen advanced production amount producing hydrogen by the hydrogen production device at a time before the reference time is the advanced shipping available amount or less,
a hydrogen postponed production amount producing hydrogen by the hydrogen production device at a time after the reference time is the postponed shipping available amount or less, and
a reference time hydrogen production amount producing hydrogen by the hydrogen production device at the reference time is equal to a value obtained by subtracting the sum of the hydrogen advanced production amount and the hydrogen postponed production amount from the shipping reference amount.
